**Europäisches Patentamt**

(19) **European Patent Office**

**Office européen des brevets**

(11) Numéro de publication: **0 161 162**
**B1**

(12) **FASCICULE DE BREVET EUROPEEN**

(45) Date de publication du fascicule du brevet:
**17.11.88**

(21) Numéro de dépôt: **85400693.9**

(22) Date de dépôt: **09.04.85**

(51) Int. Cl.⁴: **H 04 Q 3/52,** H 04 N 5/268

(54) Autocommutateur à matrice de commutation vidéo.

(30) Priorité: **10.04.84 FR 8405669**

(43) Date de publication de la demande:
**13.11.85 Bulletin 85/46**

(45) Mention de la délivrance du brevet:
**17.11.88 Bulletin 88/46**

(84) Etats contractants désignés:
**AT BE DE GB IT LU NL SE**

(56) Documents cités:
**DE - B - 2 407 831**
**FR - A - 2 341 998**
**GB - A - 2 113 046**
**US - A - 3 519 744**
**US - A - 3 654 566**

(73) Titulaire: **Sorriaux, Pierre, 13, place Georges Braque,**
**F-95100 Argenteuil (FR)**

(72) Inventeur: **Sorriaux, Pierre, 13, place Georges Braque,**
**F-95100 Argenteuil (FR)**

(74) Mandataire: **Joly, Jean-Jacques et al, CABINET BEAU**
**DE LOMENIE 55, rue d'Amsterdam, F-75008 Paris (FR)**

ACTORUM AG

## Description

La présente invention concerne un autocommutateur du type comprenant une matrice de commutation vidéo pour établir une double liaison vidéo entre un poste appelant et un poste appelé dans un réseau de télécommunications groupant un ensemble de N postes d'abonné munis chacun de moyens d'émission et de réception de signaux vidéo.

Le domaine d'application de l'invention est plus particulièrement, mais non exclusivement, celui des réseaux dits «visiophoniques» ou «vidéophoniques» par lesquels il est possible d'établir entre deux postes d'abonné, d'une part, une liaison vocale téléphonique classique et, d'autre part, et simultanément, une double liaison vidéo.

Dans de tels réseaux, il est connu d'utiliser un système de commutation vidéo qui est distinct du système de commutation téléphonique et qui est commandé par des signaux provenant d'un dispositif de commande du système de commutation téléphonique. On pourra en particulier se référer à la demande de brevet FR-A 2 210 875 qui décrit un tel système de commutation vidéo utilisant une matrice de points de connexion (voir aussi FR-A 2 341 998).

La présente invention a pour but de fournir un autocommutateur du type défini en tête de la description et dans lequel la matrice de commutation vidéo et ses moyens de commande sont simplifiés.

Ce but est atteint du fait que la matrice de commutation vidéo comprend, conformément à l'invention:

a) un premier et un deuxième bus d'informations comprenant chacun un conducteurs ou canaux destinés à l'acheminement de signaux vidéo,

b) au moins un bus d'adresses,

c) des conducteurs de commande, et

d) un ensemble de N points de commutation dont chacun est associé à un poste d'abonné respectif et est relié auxdits bus et conducteurs, chaque point de commutation comportant:

– un premier et un deuxième commutateur aller à une entrée et n sorties, les entrées de ces commutateurs aller étant reliées en commun aux moyens d'émission vidéo du poste d'abonné associé, les n sorties du premier commutateur aller étant connectées au premier bus d'informations et les n sorties du deuxième commutateur aller étant connectées au deuxième bus d'informations,

– un premier et un deuxième commutateur retour à n entrées et une sortie, les sorties de ces commutateurs retour étant reliées en commun aux moyens de réception vidéo du poste d'abonné associé, les n entrées du premier commutateur retour étant connectées au premier bus d'informations et les n entrées du deuxième commutateur retour étant connectées au deuxième bus d'informations,

– un circuit recevant des signaux d'adresse transmis sur le ou les conducteurs d'adresses et produisant des signaux de commande appliqués en parallèle aux commutateurs aller et retour pour sélectionner sur chaque bus d'information un canal correspondant à l'adresse reçue, et

– un circuit recevant des signaux de commande transmis sur les conducteurs de commande et ayant une première sortie reliée en parallèle à des entrées de validation du premier commutateur aller et du deuxième commutateur retour et une deuxième sortie reliée en parallèle à des entrées de validation du deuxième commutateur aller et du premier commutateur retour, de manière à valider, le cas échéant et en fonction du signal de validation reçu, soit le couple formé par le premier commutateur aller et le deuxième commutateur retour, soit le couple formé par le deuxième commutateur aller et le premier commutateur retour, pour valider l'établissement d'une liaison entre les moyens d'émission vidéo du poste d'abonné associé et le canal sélectionné sur l'un des bus d'information et d'une liaison entre le canal sélectionné sur l'autre bus d'information et les moyens de réception vidéo du poste d'abonné associé.

La matrice vidéo de l'autocommutateur conforme à l'invention est notamment remarquable en ce qu'elle comporte un double bus d'informations pour l'établissement de la double liaison vidéo, ce qui permet de simplifier grandement la commande de la commutation vidéo.

Selon une caractéristique supplémentaire de cette matrice vidéo, la sélection entre l'un ou l'autre des couples de commutateurs aller et retour est réalisée selon que le poste d'abonné associé est un poste appelant ou un poste appelé.

Les quatre commutateurs de chaque point de commutation sont de préférence des circuits multiplexeurs/démultiplexeurs analogiques à n canaux réalisés sous forme de circuits intégrés.

D'autres particularités et avantages de la présente invention ressortiront à la lecture de la description faite ci-après, à titre indicatif mais non limitatif, en référence aux dessins annexés sur lesquels:

– la figure 1 est un schéma général partiel illustrant un réseau utilisant un autocommutateur à matrice vidéo selon la présente invention,

– la figure 2 est un schéma plus détaillé d'un point de commutation de la matrice vidéo de l'autocommutateur de la figure 1, et

– la figure 3 est un chronogramme illustrant les signaux appliqués au point de commutation de la figure 2.

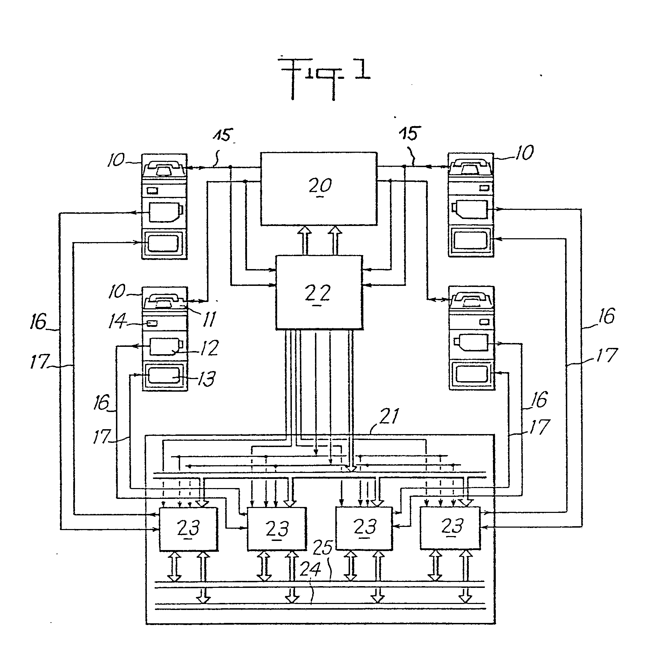

La figure 1 illustre un réseau «visiophonique» ou «vidéophonique» grâce auquel il est possible d'établir entre deux postes d'abonné 10 une liaison vocale et une double liaison vidéo. Dans l'exemple illustré, le nombre de postes d'abonné reliés au réseau est de quatre; ce nombre peut bien entendu prendre toute valeur désirée.

Chaque poste d'abonné 10 comprend un poste téléphonique classique 11, une caméra de télévision 12 destinée à convertir sous forme de signaux vidéo l'image de l'utilisateur du poste ou toute autre image que cet utilisateur souhaite transmettre, et un récepteur de télévision 13 destiné à afficher l'image représentée par les signaux vidéo reçus. En outre, est prévue une touche d'autorisation 14 qui permet à l'utilisateur du poste d'autoriser ou non la transmission de signaux vidéo depuis ce poste au cours d'une communication.

Chaque poste d'abonné 10 est relié à un ensemble de communication par une ligne téléphonique classique 15 reliée au poste téléphonique 11, une ligne vidéo aller 16 recevant les signaux produits par la caméra 12, et une ligne vidéo retour 17 transmettant les signaux vidéo reçus à l'entrée du récepteur 13.

L'ensemble de commutation comprend un commutateur téléphonique 20, un commutateur vidéo 21 et une unité centrale de commande 22. Les lignes téléphoniques 15 des différents postes 10 aboutissent au commutateur téléphonique 20 tandis que les lignes vidéo aller 16 et retour 17 des différents postes aboutissent et partent du commutateur vidéo 21. L'unité centrale de commande reçoit les signaux de signalisation transmis par les lignes téléphoniques 15 et produit, en réponse des signaux de commande des commutateurs 20 et 21.

Le commutateur téléphonique 20 et sa commande sont réalisés de façon connue en soi; il n'est pas utile de les décrire ici de façon détaillée, l'invention concernant le commutateur vidéo 21.

Le commutateur vidéo 21 est du type à matrice vidéo et comporte des points ou circuits de commutation 23 identiques, et en nombre égal à celui des postes d'abonné 10. Chaque point de commutation est associé à un poste d'abonné respectif auquel il est connecté par les lignes 16, et 17. La matrice vidéo comprend en outre: deux bus d'informations vidéo distincts 24, 25 reliés chacun de façon bidirectionnelle à chaque point de commutation 23, des conducteurs d'adresses 26 formant un bus d'adresses qui reçoit des signaux d'adresses produits par l'unité de commande 22 et auquel est relié chaque point de commutation 23, deux conducteurs de commande 27, 28 formant des bus de commande qui reçoivent des signaux généreux de validation et de sonnerie produits par l'unité de commande 22 et auquel est relié chaque point de commutation 23 ainsi qu'un ensemble de conducteurs 29, en nombre égal à celui des points de commutation, chaque conducteur 29 reliant le circuit de commande 22 à un point de commutation respectif pour transmettre un signal particulier de validation à ce dernier...

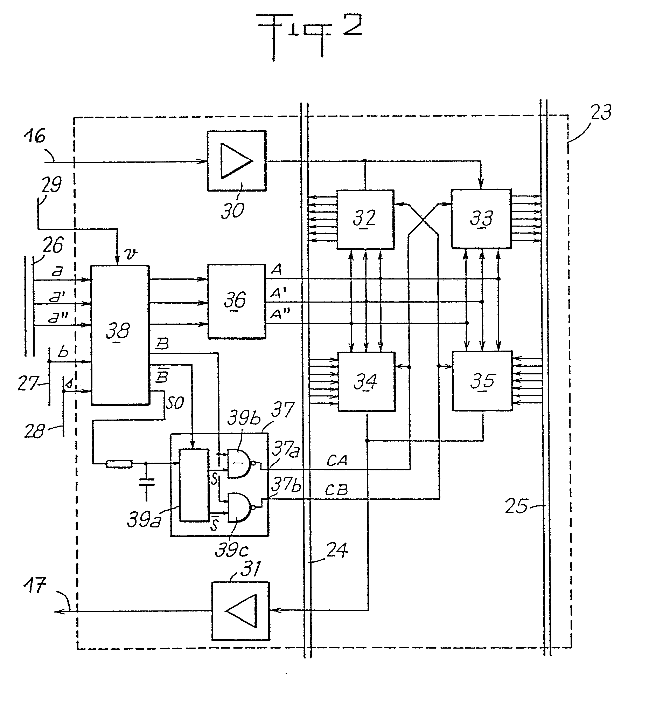

Un mode de réalisation de chaque point de commutation 23 sera maintenant décrit en référence à la figure 2.

La ligne 16 du poste d'abonné associé parvient à l'entrée d'un amplificateur d'entrée 30 dont la sortie est reliée en commun aux entrées de deux commutateurs aller 32, 33 à une entrée et n sorties, n étant égal au nombre de conducteurs ou canaux dans chaque bus d'informations 24, 25. Les n sorties du commutateur 32 sont reliées chacune à un respectif des canaux du bus 24 tandis que les n sorties du commutateur 33 sont reliées chacune à un respectif des canaux du bus 24.

La ligne 17 du poste d'abonné associé est branchée à la sortie d'un amplificateur de sortie 31 dont l'entrée est reliée en commun aux sorties de deux commutateurs retour 34, 35 à n entrées et une sortie. Les n entrées du commutateur 34 sont reliées chacune à un des canaux du bus 24 tandis que les n entrées du commutateur 35 sont reliées chacune à un des canaux du bus 25.

Les commutateurs 32 à 35 sont par exemple des circuits multiplexeurs réalisés sous forme de circuits intégrés. La sélection d'une sortie particulière des commutateurs 32 et 33 et d'une entrée particulière des commutateurs 34 et 35 est effectuée par application de signaux de commande sur des entrées de commande de commutation de ces commutateurs. Ces signaux de commande sont produits par un circuit 36 à partir des signaux d'adresse véhiculés par le bus 26. Les mêmes signaux de commande sont appliqués en parallèle aux commutateurs 32 à 35, de sorte que les deux canaux auxquels sont reliés ces commutateurs sont sélectionnés par un même signal d'adresse.

Chaque commutateur 32 à 35 comporte en outre une entrée de validation permettant d'autoriser ou non la liaison entre l'entrée (ou la sortie) du commutateur et une de ses sorties (ou entrées). En l'absence de validation, aucune liaison n'est établie par le commutateur concerné. A partir des signaux de validation et de sonnerie transmis sur les conducteurs de commande, un circuit 37 élabore sur une première sortie 37a un signal CA appliqué en commun aux entrées de validation des commutateurs 33 et 34 ou, sur une deuxième sortie 37b, un signal CB appliqué en commun aux entrées de validation des commutateurs 32 et 35, de sorte que soit le couple de commutateurs 33 et 34, soit le couple de commutateurs 32 et 35 est, le cas échéant, validé.

Un circuit 38 formé par un ensemble de bascules reçoit: les signaux d'adresses a, a', a" véhiculés par le bus 26; le signal b de validation générale et le signal général de sonnerie s véhiculés par les bus 27 et 28; et le signal v de validation particulière du poste d'abonné associé transmis sur un conducteur 29.

Le signal v est appliqué sur une entrée de commande du circuit 38 pour rendre celui-ci transparent aux autres signaux reçus lorsque le signal v est à l'état brut, et pour le bloquer sur le dernier état lorsque le signal v passe à l'état bas et jusqu'à ce qu'il revienne à l'état haut.

Les signaux d'adresse a, a', a" sous forme d'impulsions sont transformés par le circuit 38 en états A, A', A" appliqués au circuit 36. Celui-ci remplit la fonction d'interface entre les bascules 38 et les circuits commutateurs 32 à 35.

Le signal b de validation générale est transformé par le circuit 38 en états complémentaires B, $\bar{B}$ et le signal de sonnerie est transformé en état SO. Cet état SO varie au rythme des impulsions du signal de sonnerie. Il est intégré et appliqué à une bascule 39a qui fournit des états complémentaires S, $\bar{S}$ indicatifs de la présence ou de l'absence du signal de sonnerie, la bascule 39a recevant l'état $\bar{B}$ sur une entrée de commande. Les états S et $\bar{S}$ sont appliqués respectivement sur les premières entrées de deux portes NON-ET 39b, 39c qui reçoivent l'état B sur leurs deuxièmes entrées. Ces portes 39b, 39c et la bascule 39a forment le circuit 37. Ce dernier élabore les signaux CA et CB en fonction des états B, $\bar{B}$, S et $\bar{S}$. Dans l'exemple illustré, le signal CA est produit lorsque le poste d'abonné associé est appelant (CA = $\bar{S}.\bar{B}$.) et le signal CB est produit lorsque le poste d'abonné associé est appelé (CB = S.B.), la validation des commutateurs 32 à 35 étant ici effective lorsque le signal de commande CA ou CB passe au niveau bas.

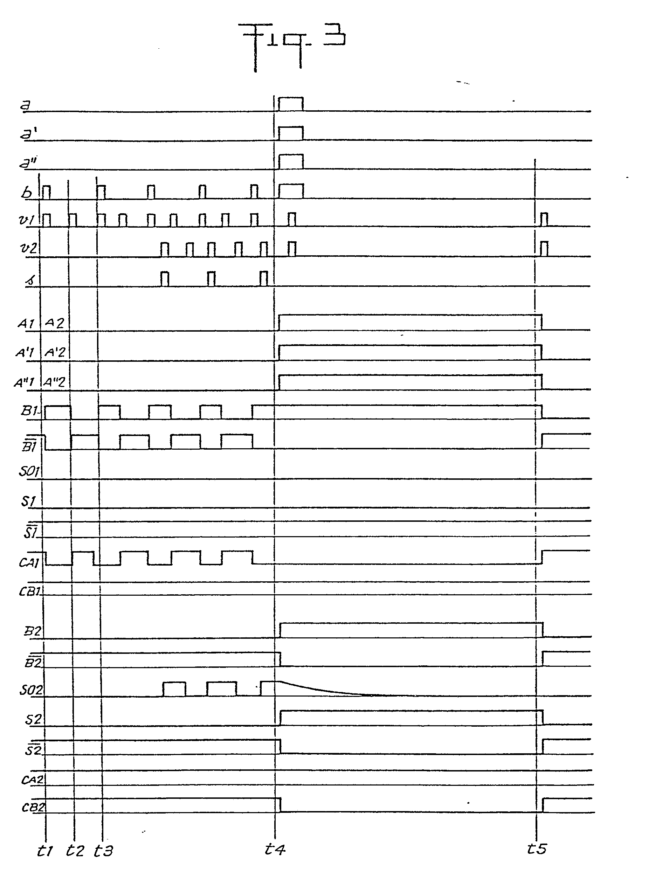

Le fonctionnement du commutateur vidéo décrit ci-avant est le suivant. On se référera à la figure 3 où sont représentés les signaux a, a', a", b, v et s ainsi que les états A, A', A", B, $\bar{B}$, SO, S, $\bar{S}$, CA, CB pour le point de commutation du poste appelant (avec l'indice 1) et pour le point de commutation du poste appelé (avec l'indice 2).

Au décrochage du poste appelant (instant t1), une impulsion est produite sur chacun des conducteurs qui acheminent les signaux b (b1 = b2 = b) et v1. Les états A, A', A" (A = A1 = A2; A' = A'1 = A'2 et A" = A"1 = A"2) sont bas de même que $\bar{B1}$, B2, S1, S2, CA1, CA2 et CB2 tandis que les états B1, $\bar{B2}$, S1, S2 et CB1 sont hauts. Aucune liaison n'est établie.

Au début de la numérotation du poste appelé (instant t2), une nouvelle impulsion est produite sur le conducteur acheminant le signal v1, ce qui inverse les états de $\bar{B1}$, B1 et CA1.

A partir du début de la sonnerie (instant t3), des impulsions sont produites sur le bus 27 (signal b) et sur le conducteur 29 acheminant le signal v1. A titre d'exemple, le signal b est alors formé par une suite d'impulsions de période fixe (3,5 s) tandis que le signal v1 suit le rythme de la tonalité et comprend une première suite d'impulsions identiques et synchrones et une deuxième suite d'impulsions analogues décalées d'une durée fixe (1,5 s) par rapport à la première. Le circuit 22 élabore alors, d'une part, le signal de sonnerie générale s (s1 = s2 = s) formé par un train d'impulsions de fréquence fixe et, d'autre part, le signal v2 de validation particulière du poste appelé, formé par un train d'impulsions de fréquence fixe double de la précédente (par exemple 1 Hz). L'état SO2 varie au rythme de la sonnerie, mais S2 reste au niveau bas en raison du déphasage entre les impulsions du signal de validation générale et celles du signal de sonnerie. Par ailleurs, l'état CA1 varie au rythme de la tonalité en suivant v1, la liaison vidéo n'étant pas établie.

Au décrochage du poste appelé (instant t4), les trains d'impulsions produits sur les conducteurs acheminant les signaux b, s, v1 et v2 sont interrompus. Ensuite, l'adresse de canal sélectionné est envoyé sur le bus 26 (dans l'exemple illustré, cette adresse est 111 en représentation binaire, c'est-à-dire (A = A' = A" = 1). Dans le même temps une impulsion de validation générale est produite sur le bus 27 ainsi qu'une impulsion de validation particulière sur chacun des conducteurs acheminant v1 et v2. Ces impulsions de validation particulières figent les états A1, A'1, A"1 et A2, A'2, A"2 dans les points de commutation associés aux postes appelé et appelant, et bloquent B1, B2 à l'état haut et $\bar{B1}$, $\bar{B2}$ à l'état bas. SO1 et S1 restent à l'état bas, tandis que CB1 et CA2 restent à l'état haut. SO2 étant à l'état haut, l'impulsion du signal b valide S2 à l'état haut avant que SO2 revienne à l'état bas par décharge du condensateur du circuit d'intégration placé à l'entrée de la bascule délivrant S2. Le passage de S2 à l'état haut provoque le passage de CB2 à l'état bas, dont la validation des commutateurs 32 et 35 du point de commutation associé au poste appelé. La présence simultanée de CA1 et CB2 à l'état bas établit la double liaison vidéo sur les canaux sélectionnés.

Au racrochage d'un des deux postes appelant et appelé (instant t5), une impulsion est produite sur chacun des deux conducteurs 29 acheminant les signaux v1 et v2. A, A', A" reviennent à l'état bas, de même que B1, B2 et S2. Le retour de CA1 et CB2 à l'état haut coupe la liaison vidéo.

On notera que les canaux d'adresse 000 sont réservés à un usage particulier qui est la transmission des tonalités sur le poste appelant. En effet, les impulsions des signaux b et v1, avant le décrochage du poste appelé, valident périodiquement les commutateurs 33, 34 du poste appelant sur les canaux d'adresse 000.

Un autre canal pourra être réservé à un poste opérateur.

**Revendications**

1. Autocommutateur à matrice de commutation vidéo (21) pour établir une double liaison vidéo entre un poste appelant et un poste appelé dans un réseau de télécommunications groupant un ensemble de N postes d'abonné (10) munis chacun de moyens d'émission (12) et de réception (13) de signaux vidéo caractérisé en ce que la matrice de commutation vidéo (21) comprend:

a) un premier et un deuxième bus d'informations (24, 25) comprenant chacun n conducteurs ou canaux destinés à l'acheminement de signaux vidéo,

b) au moins un bus d'adresses (26),

c) des conducteurs de commande (27, 28, 29), et

d) un ensemble de N points de commutation (23) dont chacun est associé à un poste d'abonné respectif (10) et est relié auxdits bus, chaque point de commutation comportant:

– un premier et un deuxième commutateur aller (32, 33) à une entrée et n sorties, les entrées de ces commutateurs aller étant reliées en commun aux moyens d'émission vidéo (12) du poste d'abonné associé (10), les n sorties du premier commutateur aller (32) étant connectées au premier bus d'informations (24) et les n sorties du deuxième commutateur aller (33) étant connectés au deuxième bus d'informations (29),

– un premier et un deuxième commutateur retour (34, 35) à n entrées et une sortie, les sorties de ces commutateurs retour étant relies en commun aux moyens de réception vidéo (13) du poste d'abonné associé (10), les n entrées du premier commutateur retour (34) étant connectées au premier bus d'informations (24) et les n entrées du deuxième commutateur retour (35) étant connectées au deuxième bus d'informations (25),
– un circuit (38, 36) recevant des signaux d'adresse transmis sur le ou les conducteurs d'adresses (26) et produisant des signaux de commande appliqués en parallèle aux commutateurs aller et retour (32 à 35) pour sélectionner sur chaque bus d'informations (24, 25) un canal correspondant à l'adresse reçue, et
– un circuit (38, 37) recevant des signaux de commande transmis sur les conducteurs de commande (27, 28, 29) et ayant une première sortie (37a) reliée en parallèle à des entrées de validation du premier commutateur aller (32) et du deuxième commutateur retour (35) et une deuxième sortie (37b) reliée en parallèle à des entrées de validation du deuxième commutateur aller (33) et du premier commutateur retour (34), de manière à valider, le cas échéant et en fonction du signal de validation reçu, soit le couple formé par le premier commutateur aller (32) et le deuxième commutateur retour (35), soit le couple formé par le deuxième commutateur aller (33) et le premier commutateur retour (34), pour valider l'établissement d'une liaison entre les moyens d'émission vidéo (12) du poste d'abonné associé (10) et le canal sélectionné sur l'un des bus d'information (24, 25) et d'une liaison entre le canal sélectionné sur l'autre bus d'information (25, 24) et les moyens de réception vidéo (13) du poste d'abonné associé (10).

2. Autocommutateur selon la revendication 1, caractérisé en ce que la sélection entre l'un ou l'autre des couples de commutateurs aller et retour (32–35, 33–34) est réalisée selon que le poste d'abonné associé est un poste appelant ou un poste appelé.

3. Autocommutateur selon l'une quelconque des revendications 1 et 2, caractérisée en ce que quatre commutateurs (32 à 35) de chaque point de commutation (23) sont des circuits multiplexeurs/démultiplexeurs analogiques à n canaux.

4. Autocommutateur selon l'une quelconque des revendications 1 à 3, caractérisé en ce que les conducteurs de commande comprennent un bus (27) sur lequel est transmis un signal général de validation, un bus (28) sur lequel est transmis un signal général de sonnerie et des conducteurs (29) respectivement reliés aux différents points de commutation (23) pour transmettre à ceux-ci des signaux particuliers de validation.

**Patentansprüche**

1. Automatische Vermittlungsanlage mit Video-Schaltmatrix (21) zum Erzeugen einer doppelten Videoverbindung zwischen einer anrufenden Stelle und einer angerufenen Stelle in einem Telekommunikationsnetz, welches eine Anordnung von N Abonnentenstellen (10) gruppiert, welche jeweils mit Sendeeinrichtungen (12) und Empfangseinrichtungen (13) der Videosignale versehen sind, dadurch gekennzeichnet, dass die Video-Schaltmatrix (21) aufweist:
a) eine erste und eine zweite Informationsleitung (24, 25), welche jeweils n Leiter oder Kanäle aufweisen, die zur Leitwegwahl von Videosignalen bestimmt sind,
b) wenigstens eine Adressenleitung (26),
c) Befehlsleiter (27, 28, 29), und
d) eine Anordnung von N Vermittlungspunkten (23) von denen jeder entsprechend einer Abonnentenstelle (10) zugeordnet ist und mit den Leitungen verbunden ist, wobei jeder Vermittlungspunkt aufweist:
– einen ersten und einen zweiten Vorwärtsvermittler (32, 33) mit einem Eingang und n Ausgängen, wobei die Eingänge dieser Vorwärtsvermittler gemeinsam mit Video-Sendeeinrichtungen (12) der zugeordneten Abonnentenstellen (10) verbunden sind, die n Ausgänge des ersten Vorwärtsvermittlers (32) mit der ersten Informationsleitung (24) verbunden sind und die n Ausgänge des zweiten Vorwärtsvermittlers (33) mit der zweiten Informationsleitung (29) verbunden sind,
– einen ersten und zweiten Rückvermittler (34, 35) mit n Eingängen und einem Ausgang, wobei die Ausgänge des Rückvermittlers gemeinsam mit Video-Empfangseinrichtungen (13) der zugeordneten Abonnentstelle (10) verbunden sind, die n Eingänge des ersten Rückvermittlers (34) mit der ersten Informationsleitung (24) verbunden sind und die n Eingänge des zweiten Rückvermittlers (35) mit der zweiten Informationsleitung (25) verbunden sind,
– einen Schaltkreis (38, 36), der Adressensignale empfängt, die auf dem oder den Adressenleitern (26) übertragen werden, und Befehlssignale erzeugt, die parallel auf die Vorwärts- und Rückvermittler (32 bis 35) aufgebracht werden, um auf jeder Informationsleitung (24, 25) einen Kanal auszuwählen, der der empfangenen Adresse entspricht,
– einen Schaltkreis (38, 37), der Befehlssignale empfängt, die über die Befehlsleiter (27, 28, 29) übertragen werden, der einen ersten Ausgang (37a) aufweist, der parallel mit EN-Eingängen (Validierungseingängen) des ersten Vorwärtsvermittlers (32) und des zweiten Rückvermittlers (35) verbunden ist, und einen zweiten Ausgang (37b) aufweist, der parallel mit EN-Eingängen des zweiten Vorwärtsvermittlers (33) und des ersten Rückvermittlers (34) verbunden ist derart, um gegebenenfalls und in Funktion des empfangenen Validierungssignals entweder die durch den ersten Vorwärtsvermittler (32) und den zweiten Rückvermittler (35) gebildete Kopplung, oder die durch den zweiten Vorwärtsvermittler (33) und den ersten Rückvermittler (34) gebildete Kopplung gültig zu machen, um die Einrichtung einer Verbindung zwischen den Video-Sendeeinrichtungen (12) der zugeordneten Abonnentenstelle (10) und dem ausgewähltem Kanal auf einem der Informationsleitungen (24, 25) und einer Verbindung zwischen dem gewählten Kanal auf der anderen Informationsleitung (25, 24) und den Video-Empfangseinrichtungen (13) der zugehörigen Abonnentenstelle (10) gültig zu machen.

2. Automatische Vermittlungsanlage nach Anspruch 1, dadurch gekennzeichnet, dass die Auswahl der einen oder der anderen der Kopplungen der Vorwärts- und Rückvermittler (32 bis 35, 33 bis 34) verwirklicht wird, je nachdem ob die zugeordnete Abonnentenstelle eine anrufende Stelle oder eine angerufene Stelle ist.

3. Automatische Vermittlungsanlage nach Anspruch 1 oder 2, dadurch gekennzeichnet, dass vier Vermittler (32 bis 35) eines jeden Vermittlungspunktes (23) analoge Multiplexer/Demultiplexer Schaltkreise mit n Kanälen sind.

4. Automatische Vermittlungsanlage nach einem der Ansprüche 1 bis 3, dadurch gekennzeichnet, dass die Befehlsleitungen eine Leitung (27), auf der ein allgemeines Validierungssignal übertragen wird, eine Leitung (28), auf der ein allgemeines Leitsignal übertragen wird und Leiter (29) aufweisen, die entsprechend mit unterschiedlichen Vermittlungspunkten (23) verbunden sind, um ihnen besondere Validierungssignale zu übertragen.

## Claims

1. Switching system with a video switching matrix (21) of the type used for setting up a dual video connection between a calling terminal and a called terminal in a telecommunication network re-grouping an array of N subscriber terminals (10) each of which is provided with means for transmitting (12) and receiving (13) video signals, characterized in that said video switching matrix (21) comprises:
a) first and second data bus (24, 25), each one comprising n conductors or channels for routing the video signals,
b) at least one address bus (26)
c) control conductors (27, 28, 29), and
d) an array of N switching points (23), each one being associated to a respective subscriber terminal (10) and being connected to said bus, each switching point comprising:
- first and second output switches (32, 33) each having one input and n outputs, the inputs of said output switches being jointly connected to the video transmitting means (12) of the associated terminal (10), the n outputs of the first output switch (32) being connected to the first data bus (24) and the n outputs of the second output switch (33) being connected to the second data bus (29),
- first and second input switches (34, 35) each having n inputs and one output, the outputs of said input switches being jointly connected to the video receiving means (13) of the associated terminal (10), the n inputs of the first input switch (34) being connected to the first data bus (24) and the n inputs of the second input (35), switch being connected to the second data bus (25),
- a circuit (38, 36) receiving address signals transmitted on the address conductor or conductors (26) and producing control signals applied in parallel to the output and input switches (32 to 35), in order to select on each data bus (24, 25) a channel corresponding to the received address, and
- a circuit (38, 37) receiving the control signals transmitted on the control conductors (27, 28, 29) and having a first output (37a) connected in parallel to inputs of validation of the first output switch (32) and of the second input switch (35) and a second output (37b) connected in parallel to inputs of validation of the second output switch (33) and of the first input switch (34), so as to validate, if necessary, and depending on the received validation signal, either the pair formed by the first output switch (32) and the second input switch (35), or the pair formed by the second output switch (33) and the first input switch (34), to validate the setting up of a connection between the video transmission means (12) of the associated terminal (10) and the channel selected on one of the data bus (24, 25), and of a connection between the channel selected on the other data bus (24, 25) and the video receiving means (13) of the associated terminal (10).

2. Switching system according to claim 1, characterized in that selection between either of the pairs of output and input switches (32–35, 33–34) is dependent on whether the associated terminal is a calling terminal or a called terminal.

3. Switching system according to any one of claims 1 and 2, characterized in that the four switches (32 to 35) of each switching point (23) are analog multiplexer/demultiplexer circuits with n channels.

4. Switching system according to any one of claims 1 to 3, characterized in that the control conductors comprise a bus (27) on which is transmitted a general validation signal, a bus (28) on which is transmitted a general ringing signal and conductors (29) which are respectively connected to the different switching points (23) for transmitting special validation signals there-to.

Fig. 1

Fig 2

Fig. 3

0 161 162

11